**Europäisches Patentamt**

**European Patent Office**

**Office européen des brevets**

(11) Veröffentlichungsnummer: **0 217 195**
**B1**

(12) # EUROPÄISCHE PATENTSCHRIFT

(45) Veröffentlichungstag der Patentschrift:
**18.01.89**

(51) Int. Cl.⁴: **C 03 C 3/32**, C 03 C 4/10 //
C03C13/04, G02B1/00

(21) Anmeldenummer: **86112614.2**

(22) Anmeldetag: **12.09.86**

(54) **Infrarotdurchlässiges Chalkogenidglas.**

(30) Priorität: **26.09.85 DE 3534275**

(43) Veröffentlichungstag der Anmeldung:
**08.04.87 Patentblatt 87/15**

(45) Bekanntmachung des Hinweises auf die Patenterteilung:
**18.01.89 Patentblatt 89/3**

(84) Benannte Vertragsstaaten:
**CH FR GB LI NL**

(56) Entgegenhaltungen:
**DE-A- 3 443 414**
**FR-A- 2 223 319**
**GB-A- 1 136 593**
**US-A- 3 440 068**
**US-A- 3 511 673**

(73) Patentinhaber: **Schott Glaswerke,
Hattenbergstrasse 10, D-6500 Mainz (DE)**
(84) Benannte Vertragsstaaten: **CH FR LI NL**

(73) Patentinhaber: **Carl-Zeiss-Stiftung trading as SCHOTT
GLASWERKE, Hattenbergstrasse 10,
D-6500 Mainz 1 (DE)**
(84) Benannte Vertragsstaaten: **GB**

(72) Erfinder: **Krolla, Hans-Georg, Am Fort Gonsenheim 29,
D-6500 Mainz (DE)**
Erfinder: **Winkler-Trudewig, Magdalena, Am
Kirchborn 20b, D-6500 Mainz-Finthen (DE)**
Erfinder: **Schumann, Werner, Westring 285,
D-6500 Mainz-Mombach (DE)**

(74) Vertreter: **Schmitz, Waldemar, Dipl.-Phys., Schmitz +
Rasper Patentanwälte Lessingstrasse 10,
D-6200 Wiesbaden (DE)**

## Beschreibung

Die Erfindung betrifft ein infrarotdurchlässiges Zwei- oder Mehrkomponenten-Chalkogenidglas auf Selen- und Germaniumgrundlage, sowie seine Verwendung für die Herstellung von optischen Fasern und optischen Elementen.

Diese Gläser sind im Wellenlängenbereich zwischen $\lambda$ ca. 0.9 µm und $\lambda$ ca. 17 µm durchlässig, weshalb sie im infraroten Spektralbereich z.B. für optische Fasern zur Übertragung von $CO_2$-Laserlicht und Infrarot-Detektoren eingesetzt werden.

Die herkömmlichen Chalkogenidgläser zeigen jedoch bei einer Wellenlänge von $\lambda = 12.8$ µm eine Absorption, die auf Verunreinigungen mit Spuren von Sauerstoff und daraus resultierenden Ge-O-Gitterschwingungen zurückzuführen ist. Der Ausläufer dieser Absorptionsbande erstreckt sich bis zur Wellenlänge $\lambda = 10,6$ µm, so dass dieses Glas relativ hohe Absorptionsverluste bei der Übertragung von Infrarotstrahlen im $CO_2$-Laser-Bereich zeigt.

Nach der DE-OS 16 21 015 kann der durch das Herstellungsverfahren und die Ausgangssubstanzen eingebrachte Restsauerstoff der Schmelze durch Zusatz eines Reduktionsmittels wie beispielsweise Kohlenstoff oder Aluminium entfernt werden.

Aus der DE-OS 34 43 414 ist ein Chalkogenidglas für optische Fasern im Infrarotbereich bekannt, bei dem diese Absorptionsbande ebenfalls mit Aluminium, Gallium oder Indium unterdrückt wird.

Hilton et al. (Journal of Non-Crystalline Solids, 17, 1975, 319-338) erwähnen neben Aluminium noch Zirkon und Kupfer. Silber, Magnesium und Kaliumchlorid beschreiben sie als wenig wirkungsvoll.

Die genannten Dotierungsstoffe weisen z.T. erhebliche Nachteile bei der Fertigung von Chalkogenidgläsern auf. Kohlenstoff reagiert mit dem Restsauerstoff verhältnismässig schlecht. Darüber hinaus neigt der Kohlenstoff zur Bildung von Agglomeraten, die als Streulichtzentren besonders in der laseroptischen Anwendung nachteilig sind.

Die Dotierung mit Aluminium ist nur in sehr geringen Mengen zulässig, da es stark korrodierend auf die Kieselglas-Schmelzgefässe wirkt. Als Folge der Korrosion werden im Chalkogenidglas Si-O-Gitterschwingungen beobachtet, deren Absorptionsbande bei $\lambda$ ca. 9.5 µm liegt und somit die für den $CO_2$-Laser massgebende Transmission bei $\lambda$ 10.6 µm nachteilig beeinflusst. Weiterhin verringert die Korrosion die Festigkeit des Schmelzgefässes und damit die Sicherheit, die bei der Herstellung von Chalkogenidgläsern einen besonderen Stellenwert besitzt. Durch die stark korrodierende Wirkung des Aluminiums wird darüber hinaus die Wiederverwendbarkeit von Kieselglasschmelzgefässen verringert, was eine Erhöhung der Herstellungskosten bedeutet.

Die in der DE-OS 34 43 414 angegebene maximale Aluminiumzugabe von 100 ppm und die gleichzeitig geforderte Reinheit der Ausgangsrohstoffe von 99.999% resultieren letztlich aus dem korrosiven Verhalten des Aluminiums.

Kupfer- und Zirkondotierungen sind erst bei relativ hohen Gehalten (1 bis 2 Atom %) wirksam, wodurch die physikalischen und optischen Eigenschaften des Glases stark verändert werden.

Ziel der Erfindung ist eine Glaszusammensetzung, mit welcher die vorher diskutierten Nachteile der bekannten Gläser beseitigt werden. Diese Aufgabe wird erfindungsgemäss mit einer Zusammensetzung gemäss den Ansprüchen gelöst.

Die Mehrkomponenten-Chalkogenidgläser enthalten neben Germanium und Selen eines oder mehrere der nachfolgend genannten Elemente: P, As, Bi, S, Te, Br, J, In, Tl, Ga, Si, Sn, Pb, Ca, Ag. Überraschenderweise wurde gefunden, dass sich die Absorptionsbande bei $\lambda$ 12.8 µm durch Zugabe von Calzium und/oder Strontium als Metall, Halogenid, Hydrid, Nitrid, Tellurid, Arsenid, Antimonid oder in einer Verbindung mit einer Glaskomponente des zwei- oder Mehrkomponenten-Chalkogenidglassystems verringert, ohne die oben genannten Nachteile.

Erfindungsgemäss können auch Gemische aus den einzelnen angegebenen Dotierungsstoffen eingesetzt werden.

Es ist von Vorteil, wenn Verbindungen eingesetzt werden, die nicht hygroskopisch sind oder bereits während der Gemengezubereitung Sauerstoff aufnehmen.

Für die Halogenide bedeutet das, dass komplexe Halogenidverbindungen bevorzugt werden, z.B. $CaSbI_6$.

Dank der Tatsache, dass die erfindungsgemässen Zusatzstoffe Calzium und Strontium keine die Kieselglasschmelzgefässe korrodierenden Eigenschaften besitzen, kann von Ausgangssubstanzen mit höherem Verunreinigungsgrad ausgegangen werden; die Höhe der Dotierung muss nur entsprechend dem Gehalt an Sauerstoff angepasst werden.

Durch diese Massnahme kann eine Senkung der Herstellungskosten erzielt werden.

Die wirksame Menge an Zusatzmitteln liegt zwischen 0.05 Atom-% und 1 Atom-%, bevorzugt bei 0.1 bis 0.3 Atom-%.

Beryllium zeigt eine ähnliche Wirkung wie Calzium und Strontium. Aufgrund der hohen Toxizität wird sein Einsatz jedoch nicht empfohlen.

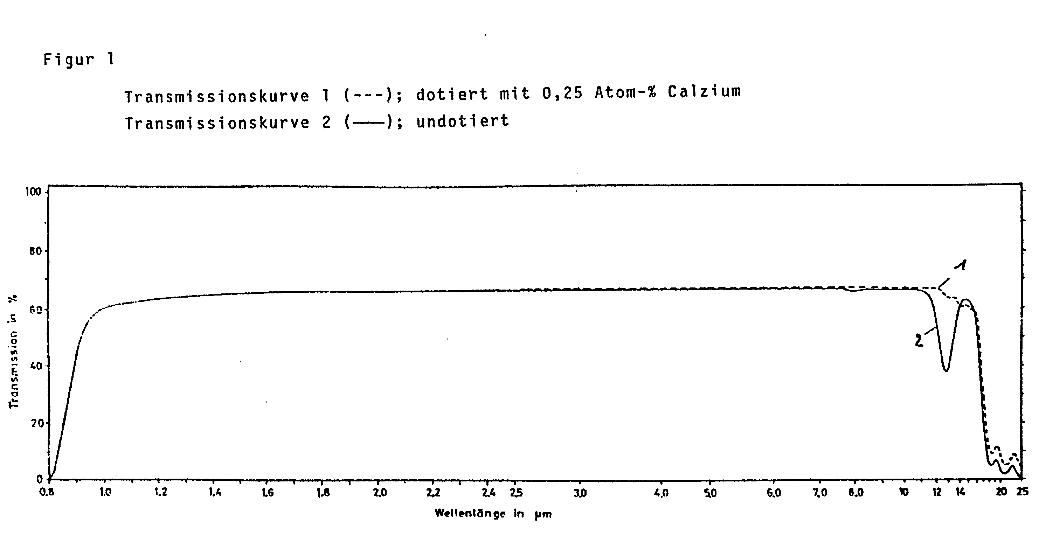

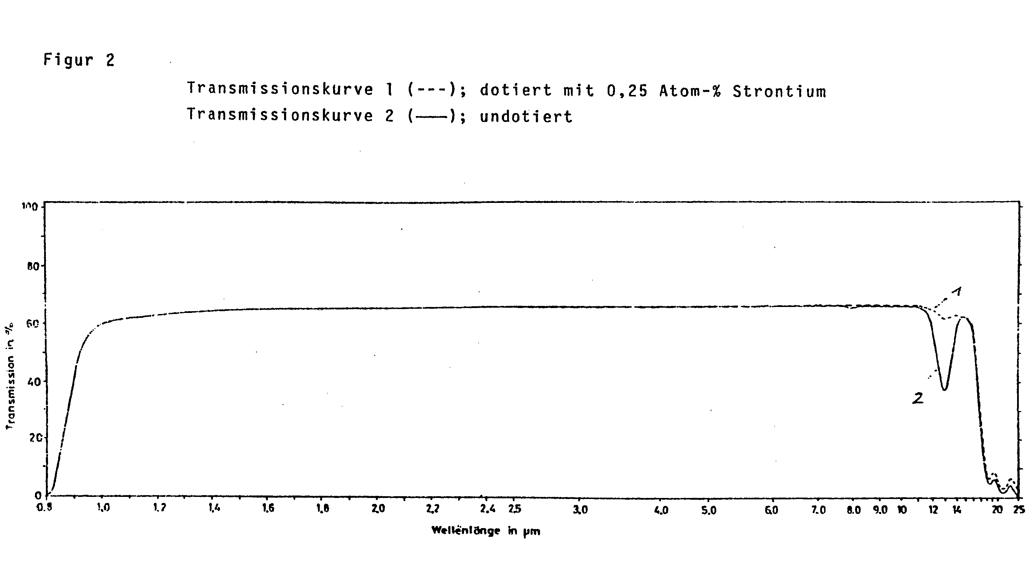

Das Transmissionsvermögen der erfindungsgemässen Gläser ist in Figur 1 und 2 an einem repräsentativen Beispiel eines Germanium-Antimon-Selen-Glases dargestellt; dabei sind jeweils die Transmissionskurven eines dotierten und eines undotierten Glases bei gleicher Probendicke im Wellenlängenbereich von 0,8 µm bis 25 µm aufgetragen.

Die gemäss der Erfindung dotierten Gläser sind in den Beispielen I und II beschrieben.

*Beispiel I:*

367.50 g Germanium, 266.55 g Antimon, 864,15 g Selen und 13,20 g Calziumjodid werden unter Inertbedingungen in ein gereinigtes und getrocknetes Kieselglasschmelzgefäss eingewogen.

Die Reinheit der Rohstoffe beträgt 99.99%.

Nach Evakuieren des Schmelzgefässes auf ≦ 10⁻⁴ mbar und nach Hochheizen auf ca. 100° C innerhalb von ca. 5 Stunden wird das Schmelzgefäss gasdicht verschlossen. Anschliessend wird die Temperatur innerhalb von 48 Stunden auf 1000° C gebracht. Bei dieser Temperatur wird die Schmelze 24 Stunden lang homogenisiert. Anschliessend wird die Temperatur innerhalb von ca. 3 Stunden auf 300° C abfallen gelassen, wobei es zur Verhinderung von Kristallisation vorteilhaft ist, den Temperaturbereich 550° C bis 300° C möglichst schnell zu durchfahren.

Die Kühlung des Glases erfolgt ab 300° C bis Raumtemperatur mit einer Kühlgeschwindigkeit von 10° C pro Stunde. Der Transmissionsverlauf des Glases ist in Fig. 1 dargestellt.

*Beispiel II:*

366.90 g Germanium, 266.10 g Antimon, 862.95 g Selen und 15.78 g Strontiumjodid werden entsprechend der in Beispiel 1 genannten Vorgehensweise eingewogen und erschmolzen.

Der Transmissionsverlauf des Glases ist in Fig. 2 dargestellt.

**Patentansprüche**

1. Infrarotdurchlässiges Zwei- oder Mehrkomponenten-Chalkogenidglas auf Germanium- und Selengrundlage, dadurch gekennzeichnet, dass es mit 0,05 bis 1,0 Atom-% mindestens eines der Erdalkalimetalle Calzium oder Strontium und/oder einer ihrer Verbindungen dotiert ist.

2. Glas nach Anspruch 1, dadurch gekennzeichnet, dass es ausschliesslich mit Calzium dotiert ist.

3. Glas nach Anspruch 1, dadurch gekennzeichnet, dass es ausschliesslich mit Strontium dotiert ist.

4. Glas nach einem der Ansprüche 1 bis 3, dadurch gekennzeichnet, dass es die Erdalkalimetallverbindung in Form eines Halogenids, Hydrids, Nitrids, Tellurids, Arsenids, Antimonids oder in Form einer Verbindung mit einer Glaskomponente dieses Zwei- oder Mehrkomponenten-Chalkogenidglassystems oder in Form eines Gemisches davon zugesetzt enthält.

**Claims**

1. Infrared transparent two- or multiple-component chalcogenide glass of the basis of germanium and selenium, characterized in that it is doped with 0.05 to 1.0 percent by atom of at least one of the alkaline earth metals calcium and strontium and/or one of their compositions.

2. Glass according to claim 1, characterized in that it is solely doped with calcium.

3. Glass according to claim 1, characterized in that it is solely doped with strontium.

4. Glass according to one of the claims 1 to 3, characterized in that it contains the alkaline earth metal compound added in the form of a halide, hydride, nitride, telluride, arsenide, antimonide or in the form of a composition with a glass component of this two- or multiple-component chalcogenide glass system or in the form of a mixture thereof.

**Revendications**

1. Verre de chalcogénure à deux ou plusieurs constituants et transparent dans l'infrarouge étant sur la base de germanium et sélénium, caractérisé par le fait qu'il est dopé de 0,05 à 1,0 pourcentage en atomes au moins d'un des métaux alcalinoterreux calcium ou strontium et/ou d'un de ses composés.

2. Verre suivant la revendication 1, caractérisé par le fait qu'il est exclusivement dopé de calcium.

3. Verre suivant la revendication 1, caractérisé par le fait qu'il est exclusivement dopé de strontium.

4. Verre suivant une des revendications 1 à 3, caractérisé par le fait qu'il contient le composé des métaux alcalinoterreux ajouté en forme d'un haloïde d'un hydrure, d'un nitrure, d'un tellurure, d'un arséniure, d'un antimoniure ou en forme de ce système de verre de chalcogénure à deux ou plusieurs constituants ou en forme d'un mélange de ceux-ci.

Figur 1

Transmissionskurve 1 (---); dotiert mit 0,25 Atom-% Calzium

Transmissionskurve 2 (———); undotiert

Figur 2

Transmissionskurve 1 (---); dotiert mit 0,25 Atom-% Strontium
Transmissionskurve 2 (———); undotiert